(19) Europäisches Patentamt

European Patent Office

Office européen des brevets

(11) **EP 1 669 780 A1**

(12) **EUROPEAN PATENT APPLICATION**

(43) Date of publication:
**14.06.2006 Bulletin 2006/24**

(51) Int Cl.:
***G02B 5/30*** (2006.01)

(21) Application number: **05257609.7**

(22) Date of filing: **12.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.12.2004 JP 2004358594**

(71) Applicant: **CANON KABUSHIKI KAISHA Tokyo (JP)**

(72) Inventor: **Kaneda, Yasushi,
Canon Kabushiki Kaisha
Ohta-ku, Tokyo (JP)**

(74) Representative: **Legg, Cyrus James Grahame et al
ABEL & IMRAY,
20 Red Lion Street
London WC1R 4PQ (GB)**

(54) **Optical element, method of manufacturing same, and optical apparatus using optical element**

(57) Grating portions (2) made of metal are arranged as a first layer at regular intervals on a substrate (1), and a filling material (3) fills the space between adjacent ones of the grating portions (2). Also, as a second layer, grating portions (2) alone are similarly arranged at regular intervals on the filling material (3). Structures each comprising grating portions of a relatively great pitch (P) are stacked one upon the other to thereby cause them to function as a deflecting plate having a small apparent pitch.

## FIG. 1

**Description**

BACKGROUND OF THE INVENTION

Field of the Invention

This invention relates to an optical element for use in an optical apparatus for spectroscopy, optical measurement, optical communication, etc., a method of manufacturing the same, and an optical apparatus using the optical element.

Related Background Art

The range of wavelength used in optical communication, optical measurement, etc. is sub $\mu$m to $2\mu$m.
If, for light in this range of wavelength, an attempt is made to make the pitch P of a grating 1/10 of the wavelength, the pitch P must be made smaller than $0.2\mu$m, and apparatuses which can made it are restricted to EB and semiconductor exposure apparatus of the newest type ArF.
The former is poor in productivity, and the latter is high in price and is also high in maintenance cost. Also, when the visible light range is taken into consideration, the grating has to be a grating having a pitch P of the order of 40nm, and it is difficult to make such a grating even by the use of the aforementioned EB.

SUMMARY OF THE INVENTION

It is an object of the present invention to solve the above-noted problem, and to stack a grating of a coarse pattern pitch while shifting the position thereof to thereby manufacture a grating apparently having a fine pitch.
That is, it is an object of the present invention to provide an optical element which can improve the characteristic of a deflecting plate of an optical apparatus even by the use of a process of making a grating of a coarse pitch, and a method of manufacturing the same.
In order to achieve the above object, a feature of the present invention is that an element for modulating the polarization of light is made into a periodic structure, which is stacked into two or more layers while the periodicity of the periodic structure is shifted.
The present invention provides an optical element including:

a substrate;
a first periodic grating formed on said substrate and having a polarization property; and
a second periodic grating shifted in position relative to said first periodic grating, and stacked on said first grating.

The invention also provides a method of manufacturing an optical element, including:

a first step of forming on a substrate an element for modulating the polarization of light in the form of a first periodic structure comprising the repetition of a dielectric material and an electrical conductor;
a second step of stacking a second periodic structure on the periodic structure formed in said first step while shifting the periodicity thereof,
the space between the dielectric material and dielectric material of each of said first and second periodic structures being filled with a filling material; and
a third step of etching said filling material with said electrical conductor as a mask.

A further feature of the present invention is that an element for modulating the polarization of light is made into a periodic structure by the repetition of a dielectric material and an electrical conductor, and the periodic structure is stacked into two or more layers while the periodicity of the periodic structure is shifted, and the dielectric material is etched with the electrical conductor as a mask.
Thus, according to the present invention, even if the pitch of a grating is coarse, the apparent pitch becomes small by stacking and the polarization property can be improved.

BRIEF DESCRIPTION OF THE DRAWINGS

Fig. 1 shows the construction of a first embodiment.
Fig. 2 is a characteristic graph of the quenching ratio.
Fig. 3 shows the construction of a second embodiment.
Fig. 4 is a characteristic graph of the quenching ratio.
Fig. 5 shows the construction of a third embodiment.
Fig. 6 is a characteristic graph of the quenching ratio.
Figs. 7A, 7B, 7C, 7D, 7E and 7F show the steps of a manufacturing process.
Fig. 8 shows the construction of a fourth embodiment.
Fig. 9 is a characteristic graph of the quenching ratio.

DETAILED DESCRIPTION OF THE PREFERRED EMBODIMENTS

The present invention will hereinafter be described in detail with respect to some embodiments thereof shown in the drawings.

First Embodiment

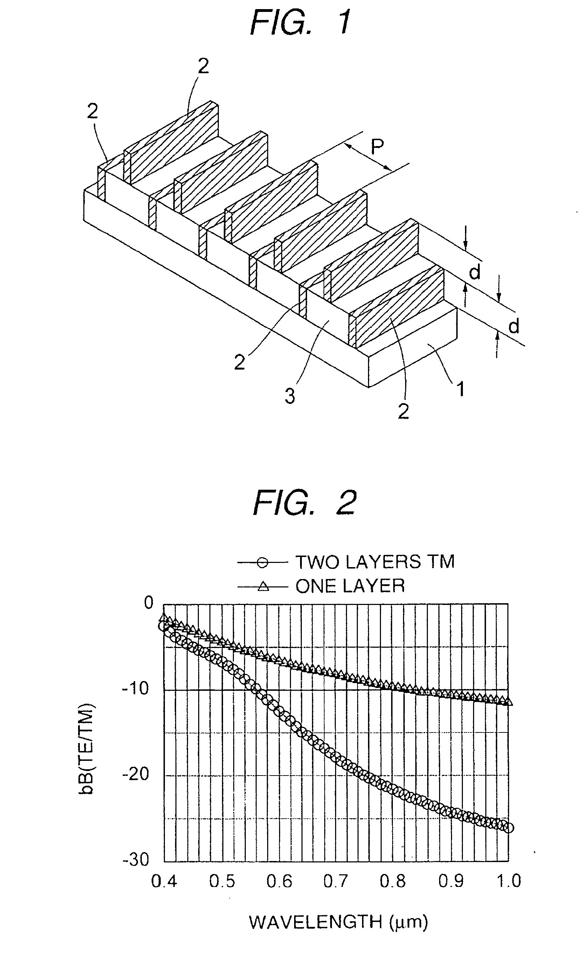

Fig. 1 shows the construction of a fine optical element according to the first embodiment.
Grating portions 2 made of metal are arranged as a first layer at regular intervals on a substrate 1, a filling material 3 fills the space between adjacent ones of the grating portions 2.

Also, as a second layer, grating portions 2 alone are similarly arranged at regular intervals on the filling material 3.

When the pitch P of the grating portions 2 of height d on the substrate 1 is given a value smaller than the wavelength λ of light used, the grating portions 2 function as deflecting plates.

When the pitch P of the grating portions 2 is sufficiently small relative to the wavelength λ, the deflecting plates function best. However, they are still difficult to make by an actual machining technique.

So, by stacking a structure comprising grating portions 2 of a relatively large pitch P, an approximation to the best performance is obtained.

In Fig. 1, the grating portions 2 are stacked. For example, the pitch P=0.26μm and height d=150nm of the grating portions 2 in the first layer, and the grating portions 2 in the second layer are disposed while being shifted by P/2 in the pitch direction with respect to the grating portions 2 in the first layer.

Al is used for the grating portions 2, $SiO_2$ is used for the filling material 3, and transparent synthetic quartz is used for the substrate 1.

The filling material 3 can fill the space between adjacent ones of the grating portions 2 in the second layer.

Fig. 2 shows the result of a simulation, evaluation being effected by the use of RCWA (Rigorous Coupled-Wave Analysis Method). It can be seen from Fig. 2 that the structure of two layers leads to the obtainment of a deflecting plate with a better quenching ratio γ. Here, the quenching ratio γ is defined by $\gamma = 10 \, Log_{10} \, (I_{TE}/I_{TM})$, where $I_{TE}$ is the element transmitted light intensity of TE wave (light having polarization in the same direction as the direction of the grating line), and $I_{TM}$ is the element transmitted light intensity of TM wave (light having polarization in the same direction as the arrangement direction of the gratings).

Also, if the refractive index of the filling material 3 filling the space between adjacent ones of the grating portions 2 as the first layer is small, the quenching ratio γ becomes great.

In the first embodiment, $SiO_2$ has been described as an example of the filling material 3, but if it is replaced with a film of $MgF_2$, there can be constructed a deflecting plate greater in quenching ratio γ.

This first embodiment is very simple in construction, and is coarse in pattern and therefore, can be manufactured even if use is not made of a manufacturing apparatus at the most advanced level. Also, when manufacture is effected by the use of a semiconductor process or the like, size reduction, higher accuracy, lower costs and mass production become possible.

By merely the construction of the film of the periodic structure member alone, or by providing it on thin film, it is possible to obtain an optical element much better in efficiency than a conventional one.

Second Embodiment

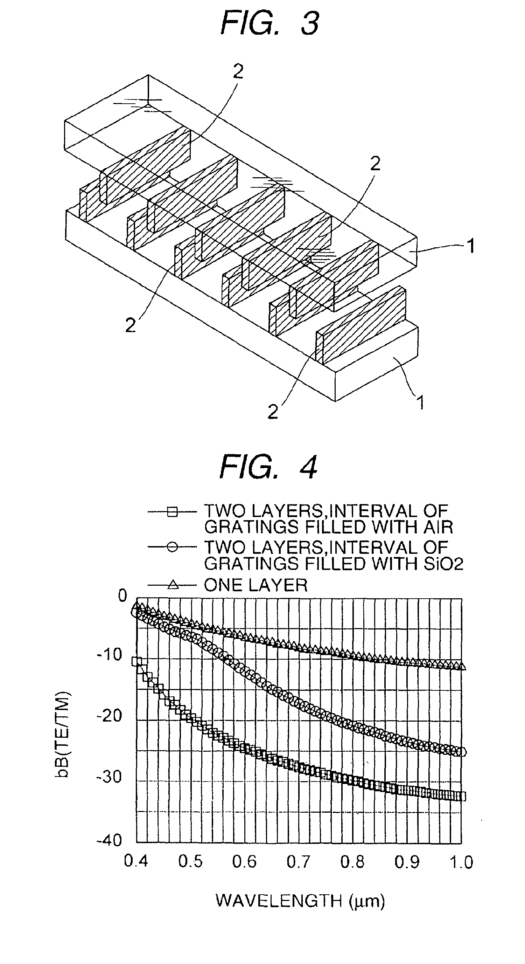

Fig. 3 shows the construction of an optical element according to the second embodiment, and this construction is one in which two transparent substrates 1 to which grating portions 2 are fixed at regular intervals are fixed with the grating portions 2 fixed in opposed relationship with one another.

The principle of the second embodiment is basically the same as that of the first embodiment. Unlike the first embodiment, however, the space between adjacent ones of the grating portions 2 in the first layer is filled with air which has a small refractive index, to thereby improve the quenching ratio γ.

If here, the pitch P of the grating portions 2 is 0.26μm, and the height d of the grating portions 2 is 0.15μm, and the filling factor f is 0.15, a characteristic of the quenching ratio γ such as is shown in Fig. 4 is obtained as the result of the simulation of RCWA.

In Fig. 4, points indicated by triangles represent the characteristic of the quenching ratio γ of a conventional grid wire deflecting plate (the pitch P=0.26μm, the height d of the grating =0.15μm, the filling factor f=0.3) relative to the wavelength when it has one layer of grating portions 2.

Also, points indicated by circles represent the characteristic of the quenching ratio γ of the first embodiment, and points indicated by rectangles represent the characteristic of the quenching ratio γ of the second embodiment.

If the space between adjacent ones of the grating portions 2 in the first layer is not filled with the filling material 3, it becomes difficult to form a structure in the upper portion thereof, but as shown in Fig. 3, two elements have only one layer of grating portions 2, and they are stacked one upon the other with the grating portions opposed to each other, as a result, the manufacture of this structure becomes possible.

This second embodiment has the following effects, in addition to the effects of the first embodiment.

(1) The substance between adjacent ones of the grating portions 2 in the first layer is air or the like which has a low refractive index and therefore, the quenching ratio γ is good.
(2) The structures are manufactured and stuck together, whereby a stacked structure can be manufactured simply.

Third Embodiment

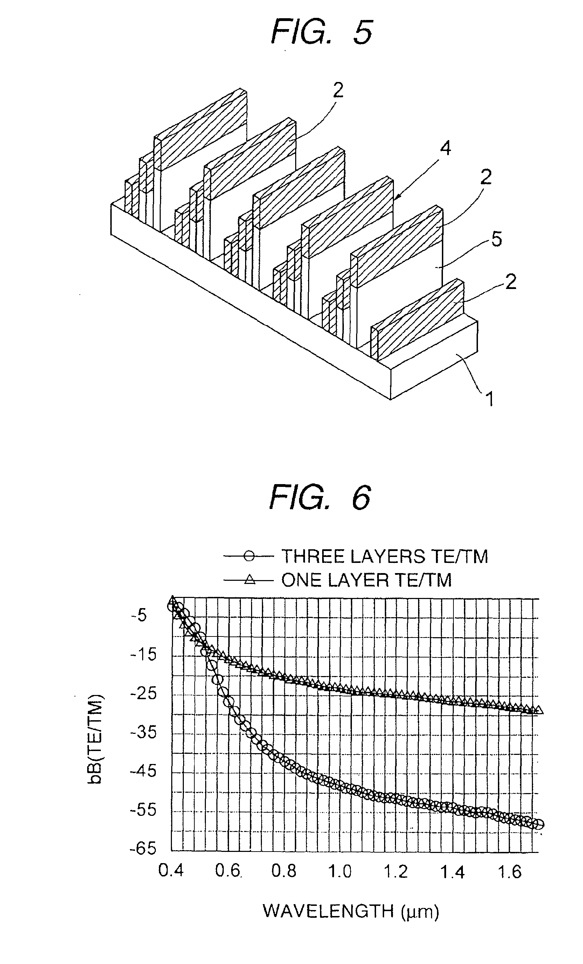

Fig. 5 shows the construction of an optical element according to the third embodiment, in which on a substrate 1, there are arranged at regular intervals wall portions 4 provided with grating portions 2 on the uppermost portions thereof and having three different heights.

Supporting portions 5 supporting the grating portions 2 are made of $SiO_2$.

Also, the wall portions 4 having three different heights are arranged in order of height, and combinations of the three wall portions 4 are repeatedly arranged.

The principle of this third embodiment is also basically the same as that of the first embodiment. The portions other than the $SiO_2$ layers providing the supporting portions 5 under the grating portions 2 in the upper layer are air and therefore, the actual average refractive index becomes smaller than the refractive index of $SiO_2$. Therefore, the quenching ratio $\gamma$ of the stacked structures is improved.

Here, the pitch P of the grating portions 2 is $0.26\mu$m, the height d of the grating portions 2 is $0.18\mu$m, the filling factor f is 0.15, and three layers are provided as shown in Fig. 5. As the result of the simulation of RCWA, there is obtained a characteristic of the quenching ratio $\gamma$ such as is shown in Fig. 6.

Triangles in Fig. 6 represent the characteristic of the quenching ratio $\gamma$ of a conventional grid wire deflecting plate (the pitch P=$0.26\mu$m, the height d of the grating =$0.18\mu$m, the filling factor f=0.3) relative to the wavelength, and points indicated by circles represent the characteristic of the quenching ratio $\gamma$ of this third embodiment.

If the space between adjacent ones of the grating portions 2 in the first layer is not filled with the filling material, it becomes possible to form a structure thereon, but periodic structures each comprising three layers of grating portions 2 and the filling material 3 are stacked, and the filling material 3 of this stacked structure is etched until the substrate 1 appears, as a result this structure can be manufactured easily.

Also, Al and $SiO_2$ differ as to the etchant during etching and therefore, the grating portions 2 in the Al portion can be caused to act as a mask when $SiO_2$ of the supporting portions 5 is etched.

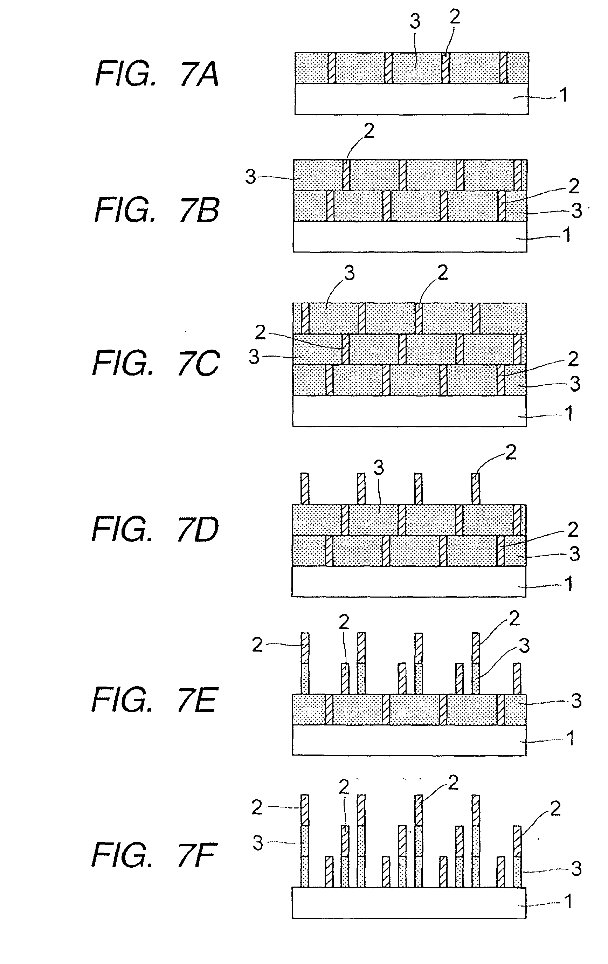

Figs. 7A to 7F show this process, and in Fig. 7A, the pattern of the grating portions 2 by Al is made on the substrate 1, and the space between adjacent ones of these grating portions 2 is filled with the filling material 3 of $SiO_2$. In Fig. 7B, the pattern of the grating portions 2 is again made thereon, and the space between adjacent ones of these grating portions 2 is filled with the filling material 3. In Fig. 7C, the same step as that of Fig. 7B is repeated to thereby manufacture a three-layer stacked structure. In Figs. 7D to 7D, a fluorine etchant is used and dry etching is effected on the filling material 3 with the grating portions 2 as a mask, whereupon finally, an optical element of the shape of Fig. 7F, i.e., the shape of Fig. 5 can be obtained.

This third embodiment has the following effects, in addition to the effects of Embodiments 1 and 2.

(1) the third embodiment is of a simple construction, and if dry etching or the like is used, the final shape can be easily formed.
(2) the third embodiment is of e.g. a three-layer construction and therefore, the apparent pitch becomes fine, and there is obtained a deflecting plate having a good quenching ratio $\gamma$.

Fourth Embodiment

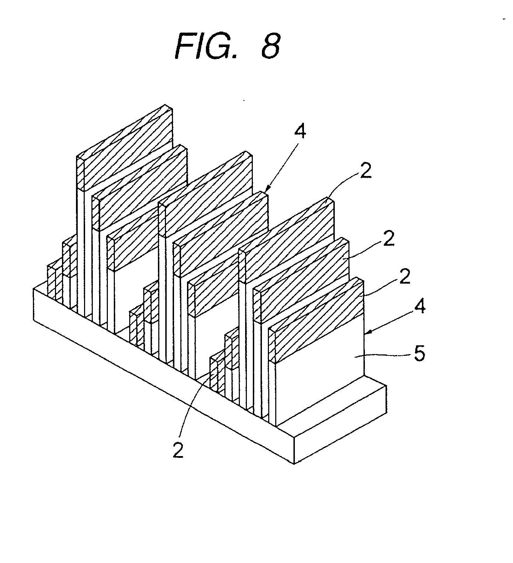

Fig. 8 shows the construction of an optical element according to the fourth embodiment.

The structure of this fourth embodiment is a fine-layer structure, and the manufacturing process thereof is the development of the process of the third embodiment.

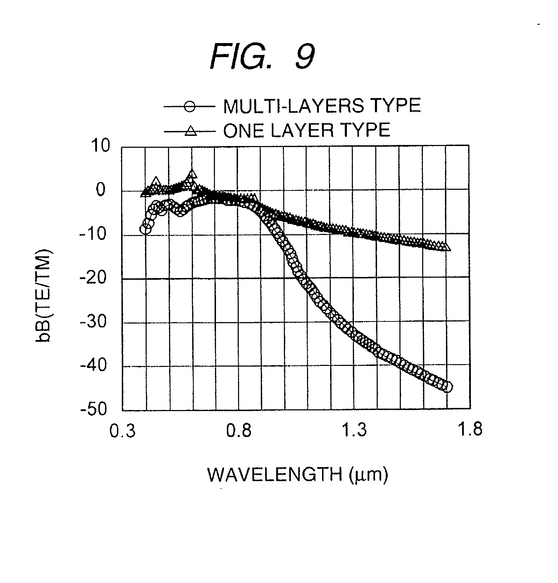

If here, the pitch P of the grating portions 2 is $0.6\mu$m, and the height d of the grating portions 2 is $0.18\mu$m, and the filling factor f is 0.1, and five layers are made, a characteristic of the quenching ratio such as is shown in Fig. 9 is obtained as the result of the simulation of RCWA.

In Fig. 9, a line of circles indicates the characteristic of the quenching ratio $\gamma$ of the structure of the fourth embodiment, and a line of triangles indicates the characteristic of the quenching ratio $\gamma$ of a grating of one layer having a pitch of $0.6\mu$m.

According to the fourth embodiment, the quenching ratio $\gamma$ is improved from a wavelength of the order of $0.9\mu$m, and in the range of $1.1\mu$m, there is shown a characteristic usable at efficiency of -20dB or greater.

This fourth embodiment has the following effects, in addition to the effects of the foregoing first, second and third embodiments.

(1) the fourth embodiment is of a simple construction, and if dry etching or the like is used, the final shape can be simple formed.
(2) the fourth embodiment is of a five-layer construction and therefore, in spite of the pitch of one layer being greater than the wavelength, the apparent pitch becomes that for the five-layer construction, and it becomes possible to easily manufacture a deflecting plate having a good quenching ratio $\gamma$.

According to the above-mentioned embodiments, the optical element satisfies the following condition, assuming that the number of the layer is n, a pitch of the gratings (grating portions 2) in each layer is P and a filling factor is f. That is, $f \leq P/(2n)$.

Moreover, the above mentioned inventions in the first to forth embodiments can be used in a linear encoder as an optical measurement or an optical isolator as an optical communication device.

**Claims**

**1.** An optical element including:

a substrate;
a first periodic gratings formed on said substrate and having a polarization property as a first layer; and
a second periodic grating shifted in position relative to said first periodic grating as a second layer, and stacked on said first grating.

**2.** An optical element according to Claim 1, wherein said first and second periodic gratings are disposed at regular intervals in each layer.

**3.** An optical element according to Claim 1, the cross sections of said first and second periodic gratings are rectangular.

**4.** An optical element according to Claim 1, wherein said first and second periodic gratings are formed of a metal material.

**5.** An optical element according to Claim 1, wherein said first layer is constituted by the repetition of a dielectric material and an electrical conductor.

**6.** An optical element according to Claim 1, wherein the periods of said first and second periodic elements are shorter than a wavelength used.

**7.** An optical element according to Claim 1, wherein assuming that the number of the layer is n, a pitch of the gratings in each layer is P and a filling factor is f, the following condition is satisfied:

$$f \leq P/(2n) \,.$$

**8.** An optical apparatus using an optical element according to any one of Claims 1 to 7.

**9.** A method of manufacturing an optical element, including:

a first step of forming on a substrate an element for modulating the polarization of light in the form of a first periodic structure comprising the repetition of a dielectric material and an electrical conductor;
a second step of stacking a second periodic structure on the periodic structure formed in said first step while shifting the periodicity thereof, the space between the dielectric material and dielectric material of each of said first and second periodic structures being filled with a filling material; and
a third step of etching said filling material with said electrical conductor as a mask.

# FIG. 1

# FIG. 2

# FIG. 3

# FIG. 4

—□— TWO LAYERS,INTERVAL OF
GRATINGS FILLED WITH AIR

—○— TWO LAYERS,INTERVAL OF
GRATINGS FILLED WITH SiO2

—△— ONE LAYER

WAVELENGTH (μm)

## FIG. 5

## FIG. 6

EP 1 669 780 A1

FIG. 7A

FIG. 7B

FIG. 7C

FIG. 7D

FIG. 7E

FIG. 7F

# FIG. 8

# FIG. 9

European Patent Office

**EUROPEAN SEARCH REPORT**

Application Number

EP 05 25 7609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 289 381 A (GARVIN ET AL) 15 September 1981 (1981-09-15) * column 1, line 60 - column 2, line 49 * | 1-8 | G02B5/30 |
| Y | * column 3, line 29 - line 67; figure 1 * * figures 2-8 * * column 4, line 65 - column 5, line 15 * * column 6, line 24 - line 40; figure 9 * ----- | 9 | |
| Y | WO 00/79317 A (MOXTEK) 28 December 2000 (2000-12-28) * page 5, line 15 - line 25 * * page 6, line 12 - line 18 * * page 14, line 7 - line 30; figure 9 * * page 16, line 5 - line 9 * ----- | 9 | |
| X | YU ZHAONING ET AL: "Reflective polarizer based on a stacked double-layer subwavelength metal grating structure fabricated using nanoimprint lithography" APPLIED PHYSICS LETTERS, AIP, AMERICAN INSTITUTE OF PHYSICS, MELVILLE, NY, US, vol. 77, no. 7, 14 August 2000 (2000-08-14), pages 927-929, XP012027261 ISSN: 0003-6951 * page 927 * * page 928 * ----- | 1-8 | |
| | | | **TECHNICAL FIELDS SEARCHED (IPC)** |
| | | | G02B |
| X | PATENT ABSTRACTS OF JAPAN vol. 2003, no. 07, 3 July 2003 (2003-07-03) -& JP 2003 066229 A (KYOCERA CORP), 5 March 2003 (2003-03-05) * paragraph [0007]; figures 1,2,5 * * paragraph [0010] - paragraph [0019] * * paragraph [0028] - paragraph [0032] * ----- | 1-6,8 | |

-/--

The present search report has been drawn up for all claims

| Place of search | Date of completion of the search | Examiner |
|---|---|---|
| The Hague | 14 March 2006 | Bourhis, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 25 7609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/019070 A (NANOOPTO CORPORATION) 4 March 2004 (2004-03-04) * figure 2 * | 1-6,8 | |
| X | PATENT ABSTRACTS OF JAPAN vol. 009, no. 203 (P-381), 21 August 1985 (1985-08-21) -& JP 60 066203 A (MATSUSHITA DENKI SANGYO KK), 16 April 1985 (1985-04-16) * abstract; figure 3 * | 1-5,8 | |

TECHNICAL FIELDS
SEARCHED     (IPC)

The present search report has been drawn up for all claims

| Place of search | Date of completion of the search | Examiner |
|---|---|---|
| The Hague | 14 March 2006 | Bourhis, J-F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 7609

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2006

| Patent document cited in search report | | Publication date | Patent family member(s) | | Publication date |
|---|---|---|---|---|---|
| US 4289381 | A | 15-09-1981 | NONE | | |
| WO 0079317 | A | 28-12-2000 | AU | 769457 B2 | 29-01-2004 |
| | | | AU | 5758300 A | 09-01-2001 |
| | | | BR | 0012529 A | 23-07-2002 |
| | | | CA | 2375522 A1 | 28-12-2000 |
| | | | CN | 1363048 A | 07-08-2002 |
| | | | EP | 1192486 A1 | 03-04-2002 |
| | | | JP | 2003502708 T | 21-01-2003 |
| | | | TW | 546494 B | 11-08-2003 |
| | | | US | 6122103 A | 19-09-2000 |
| | | | US | 6288840 B1 | 11-09-2001 |
| JP 2003066229 | A | 05-03-2003 | NONE | | |
| WO 2004019070 | A | 04-03-2004 | AU | 2003262728 A1 | 11-03-2004 |
| | | | CN | 1682132 A | 12-10-2005 |
| | | | EP | 1540387 A2 | 15-06-2005 |
| JP 60066203 | A | 16-04-1985 | NONE | | |

EPO FORM P0459

For more details about this annex : see Official Journal of the European Patent Office, No. 12/82